# FASCICULE DE BREVET EUROPEEN

(11) **EP 4 305 289 B1**
(45) Date de publication et mention de la délivrance du brevet: **04.12.2024**
(21) Numéro de dépôt: 22712970.7
(22) Date de dépôt: 06.03.2022
(51) Int. Cl.: F02C 7/14, F02C 7/18, F28D 1/00

(54) **ÉCHANGEUR DE CHALEUR SURFACIQUE AVEC SORTIES ADDITIONELLES**
OBERFLÄCHENWÄRMETAUSCHER MIT ZUSÄTZLICHEN AUSLÄSSEN
SURFACE HEAT EXCHANGER HAVING ADDITIONAL OUTLETS

(30) Priorité: 09.03.2021 FR 2102270
(43) Date de publication de la demande: 17.01.2024
(73) Titulaire: SAFRAN, 75015 Paris (FR)
(72) Inventeur: TOUBIANA, Ephraïm, 77550 MOISSY-CRAMAYEL (FR); MAALOUF, Samer, 77550 MOISSY-CRAMAYEL (FR); HOLKA, Quentin, 77550 MOISSY-CRAMAYEL (FR)
(74) Mandataire: Gevers & Orès
(86) Numéro de dépôt international: PCT/FR2022/050397
(87) Numéro de publication internationale: WO 2022/189739

(56) Documents cités:
- EP-A1- 2 894 323
- WO-A1-2016/156739
- WO-A1-92/11451
- FR-A1- 3 096 444

## Description

### Domaine technique de l'invention

La présente invention concerne le domaine général de l'aéronautique. Elle vise en particulier un échangeur de chaleur surfacique pour une turbomachine, ainsi qu'une turbomachine comportant un tel échangeur de chaleur.

### Arrière-plan technique

Une turbomachine, notamment d'aéronef, comprend divers organes et/ou équipements devant être lubrifiés et/ou refroidis tels que des paliers à roulements et engrenages. La chaleur dégagée par ces composants qui peut être très importante suivant la puissance de l'organe et/ou de l'équipement, est transportée par un fluide et évacuée vers des sources froides disponibles dans l'aéronef.

Il est connu d'équiper la turbomachine d'un ou de plusieurs systèmes d'échanges de chaleur pour réaliser l'échange de chaleur entre le fluide lubrifiant (typiquement de l'huile) et la source froide (air, carburant, etc.). Il existe même différents types de systèmes d'échange de chaleur qui sont par exemple les échangeurs de chaleur carburant/huile généralement connus sous l'acronyme anglais FCOC pour « *Fuel Cooled Oil Cooler »* et les échangeurs de chaleur air/huile connus sous l'acronyme anglais ACOC pour *« Air-Cooled Oil Cooler ».*

Les échangeurs de chaleur FCOC ont une double fonction de réchauffement du carburant avant la combustion dans la chambre de combustion de la turbomachine et de refroidissement de l'huile réchauffée par les dissipations thermiques de la turbomachine. Cependant, les échangeurs de chaleur FCOC ne suffisent pas à absorber toutes les dissipations thermiques car la température du carburant est limitée en vue des contraintes de sécurité.

Le complément de refroidissement est obtenu par les échangeurs de chaleur ACOC, en particulier ceux du type surfacique et connus sous l'acronyme SACOC. Les échangeurs de chaleur surfacique sont généralement agencés dans la veine secondaire de la turbomachine et utilisent le flux d'air secondaire pour le refroidissement de l'huile circulant dans la turbomachine. Ces échangeurs de chaleur se présentent sous la forme d'une pièce surfacique métallique permettant le passage d'huile dans des canaux. Le flux d'air secondaire est guidé le long d'ailettes portées par cette pièce surfacique et qui ont pour rôle d'augmenter la surface de contact avec le flux d'air secondaire et d'extraire les calories. Toutefois, les échangeurs de chaleur SACOC ont pour inconvénient de créer des pertes de charge supplémentaires dans la veine secondaire concernée puisqu'ils perturbent l'écoulement d'air, ce qui impacte la performance de la turbomachine ainsi que la consommation de carburant spécifique.

Leur performance aérothermique (ratio entre la puissance thermique dissipée et la perte de charge induite du côté du flux d'air secondaire) est faible.

De plus, les besoins en refroidissement du fluide lubrifiant augmentent du fait de l'accroissement des vitesses de rotation et des puissances mises en jeu pour répondre aux tendances de spécification sur les turbomachines.

On connaît des systèmes d'échange de chaleur tel que ceux décrit dans FR-A1-3 096 444 et FR-A1-3 096 409 dans lesquels les conditions d'écoulement sont modifiées permettant d'assurer une dissipation thermique avec une performance aérothermique optimale, ce qui contribue à la réduction des pertes de charges. Ces systèmes d'échange de chaleur, lorsqu'ils sont installées dans la veine secondaire d'une turbomachine, comprennent des parois amont et aval profilées qui permettent de mieux contrôler la vitesse d'écoulement du flux d'air entrant et sortant de l'échangeur de chaleur. Plus particulièrement, la paroi amont présente un profil divergent permettant de ralentir le flux d'air entrant dans un espace d'échange thermique de l'échangeur de chaleur et la paroi aval présente un profil convergent permettant d'accélérer le flux d'air sortant de l'échangeur de chaleur.

Cependant, le profil « convergent » notamment de la paroi en sortie de l'échangeur de chaleur peut quand même amener la partie du flux d'air contournant l'échangeur de chaleur, c'est-à-dire, le flux d'air qui ne le traverse pas, à devenir un flux d'air turbulent dans une zone de recirculation de flux. Il est possible de modifier le profil de la paroi en sortie de l'échangeur de manière à la rendre moins « convergente ». Or, la longueur totale de l'échangeur de chaleur est contrainte par les dimensions de la veine secondaire dans laquelle il est installé. Une diminution de la convergence de la paroi de sortie conduit d'une part à une réduction de l'espace central de l'échangeur de chaleur pénalisant les échanges thermiques et d'autre part à une accélération prématurée du flux d'air sortant pénalisant la traînée de l'échangeur de chaleur surfacique.

### Résumé de l'invention

La présente invention a pour but de pallier cet inconvénient en fournissant un échangeur de chaleur surfacique permettant de mieux contrôler l'écoulement du flux d'air en sortie de l'échangeur.

À cet effet, selon la revendication 1, l'invention concerne un échangeur de chaleur surfacique de turbomachine d'aéronef comprenant :
- une paroi de support,
- un panneau agencé sensiblement parallèlement à la paroi de support,
- des cloisons configurées pour lier la paroi de support au panneau suivant une direction perpendiculaire à ladite paroi de support, lesdites cloisons définissant entre elles des canaux dans lesquels s'écoule un premier flux d'air, lesdites cloisons étant sensiblement parallèles entre elles et à une première direction d'écoulement dudit premier flux d'air,
- des ailettes situées dans lesdits canaux et s'étendant sensiblement parallèlement entre elles et à ladite première direction d'écoulement, lesdites ailettes étant destinées à être balayées par ledit premier flux d'air,
ledit panneau comportant :
- une partie centrale sensiblement parallèle à ladite paroi de support et située à une première distance de cette paroi de support,
- une partie aval présentant une orientation générale inclinée par rapport à ladite paroi de support, ladite partie aval comportant une extrémité amont reliée à ladite partie centrale et une extrémité aval libre située à une seconde distance de la paroi de support et délimitant une sortie principale des canaux avec la paroi de support, ladite seconde distance étant inférieure à ladite première distance.

Selon l'invention, ladite partie aval comporte au moins deux volets fixes disposés d'amont en aval les uns derrière les autres et configurés pour délimiter entre eux au moins une sortie additionnelle desdits canaux.

Ainsi, cette solution permet d'atteindre l'objectif susmentionné. En particulier, l'ajout de sorties additionnelles des canaux pour le premier flux d'air permet de compenser une convergence trop importante de la partie aval de l'échangeur. En effet, le premier flux d'air passant par une sortie additionnelle située plus près du panneau que la sortie principale prévient tout décrochement du second flux d'air contournant l'échangeur de chaleur. Par ailleurs, l'augmentation du nombre de sorties additionnelles permet également au premier flux d'air de s'écouler dans l'échangeur de chaleur surfacique avec une vitesse homogène sur toute sa hauteur.

L'échangeur de chaleur surfacique peut également présenter une ou plusieurs des caractéristiques suivantes:
- le nombre de volets est compris entre deux et cinq,
- chacun desdits volets s'étend dans un plan incliné d'un angle prédéterminé par rapport à ladite paroi de support,
- la valeur des angles prédéterminés desdits volets diminue depuis ladite partie centrale jusqu'à ladite sortie principale,
- la valeur de chacun desdits angles des volets est comprise entre 5° et 45°,
- la ou chaque sortie additionnelle est définie par une hauteur dont la valeur est inférieure ou égale à ladite seconde distance,
- la ou chaque hauteur radiale et la seconde distance radiale représentent chacune entre 5% et 60% de ladite première distance,
- chacun desdits volets est relié à ladite paroi de support par au moins une partie desdites ailettes et/ou par un élément de support s'élevant entre la paroi de support et les volets,
- au moins une partie desdits volets comportent un bord aval situé au voisinage d'un bord amont d'un volet adjacent, lesdits bords amont et bords aval étant agencés sensiblement dans un même plan perpendiculaire à ladite paroi de support,
- l'échangeur de chaleur surfacique est réalisé par fabrication additive,
- l'échangeur de chaleur surfacique est réalisé par usinage et/ou par brasage. L'invention concerne en outre une turbomachine comprenant au moins un échangeur de chaleur surfacique présentant l'une quelconque des caractéristiques précédentes.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue en coupe axiale d'un exemple de turbomachine à laquelle s'applique l'invention;
[Fig. 2] La figure 2 est une vue en perspective d'un mode de réalisation d'un échangeur de chaleur surfacique ;
[Fig. 3] La figure 3 montre en perspective et partiellement un échangeur de chaleur comprenant un panneau recouvrant des ailettes;
[Fig. 4] La figure 4 est une vue en perspective de l'échangeur de chaleur de la figure 3 sans la partie centrale du panneau;
[Fig. 5] La figure 5 est une vue coupe axiale d'un mode de réalisation d'un système d'échange de chaleur selon l'invention ;
[Fig. 6] La figure 6 montre en coupe axiale un échangeur de chaleur surfacique selon l'invention ; et
[Fig. 7] La figure 7 est une vue en coupe axiale d'une partie de l'échangeur de chaleur de la figure 6 selon l'invention.

### Description détaillée de l'invention

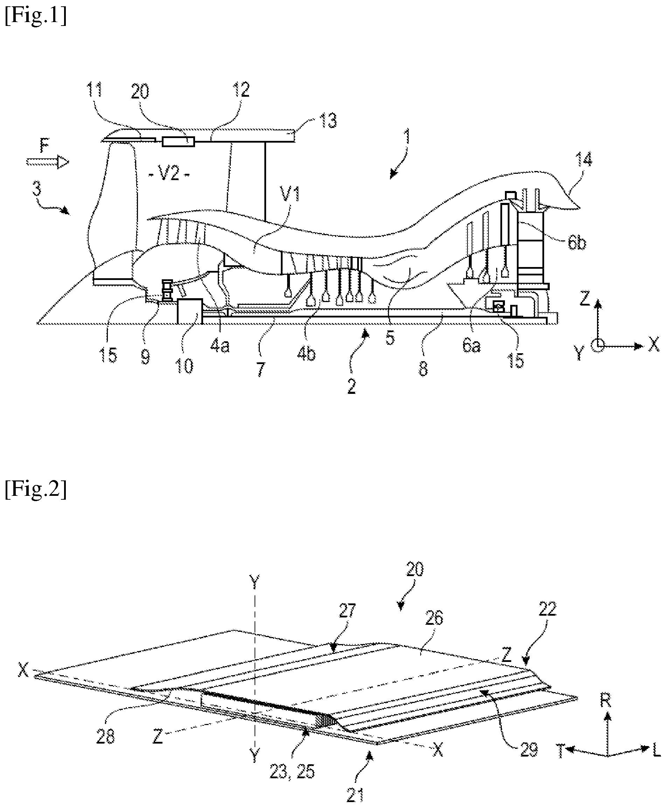

La figure 1 montre une vue en coupe axiale d'une turbomachine d'axe longitudinal X à laquelle s'applique l'invention. La turbomachine représentée est une turbomachine 1 double flux destinée à être montée sur un aéronef. Bien entendu, l'invention n'est pas limitée à ce type de turbomachine.

Cette turbomachine 1 double flux comprend de manière générale un générateur de gaz 2 en amont duquel est montée une soufflante ou module de soufflante 3.

Dans la présente invention, les termes « amont » et « aval » sont utilisés en référence à un positionnement par rapport à un axe de circulation des gaz dans la turbomachine 1 et ici suivant l'axe longitudinal X-X. On entend par « longitudinal » ou « longitudinalement » toute direction parallèle à l'axe longitudinal X-X.

Le générateur de gaz 2 comprend un ensemble de compresseur de gaz (comportant ici un compresseur basse pression 4a et un compresseur haute pression 4b), une chambre de combustion 5 et un ensemble de turbine (comportant ici une turbine haute pression 6a et une turbine basse pression 6b). Classiquement, la turbomachine comprend un arbre basse pression 7 qui relie le compresseur basse pression et la turbine basse pression pour former un corps basse pression et un arbre haute pression 8 qui relie le compresseur haute pression et la turbine haute pression pour former un corps haute pression. L'arbre basse pression 7, centré sur l'axe longitudinal, entraîne ici un arbre de soufflante 9 grâce à un réducteur de vitesse 10. Des paliers de guidage en rotation permettent également de guider en rotation l'arbre basse pression 7 par rapport à une structure fixe de la turbomachine.

La soufflante 3 est carénée par un carter de soufflante 11 portée par une nacelle 12 et génère un flux d'air primaire qui circule à travers le générateur de gaz 2 dans une veine primaire V1 et un flux d'air secondaire qui circule dans une veine secondaire V2 autour du générateur de gaz 2. Le flux d'air secondaire V2 est éjecté par une tuyère secondaire 13 terminant la nacelle alors que le flux d'air primaire est éjecté à l'extérieur de la turbomachine via une tuyère d'éjection 14 située en aval du générateur de gaz 2. Dans la suite de la description le carter de soufflante et la nacelle sont considérés comme une seule et même pièce.

Les paliers de guidage 15 et le réducteur de vitesse 10 dans cet exemple de configuration de la turbomachine doivent être lubrifiés et/ ou refroidis pour assurer la performance de la turbomachine. La puissance générée par ceux-ci est dissipée dans un fluide provenant d'une source d'alimentation en fluide installée dans la turbomachine et qui permet de lubrifier et/ou de refroidir divers organes et/ou équipements de la turbomachine. Bien entendu d'autres équipements de la turbomachine génèrent beaucoup de chaleur devant être extraite de leur environnement.

A cet effet, la turbomachine 1 comprend un échangeur 20 de chaleur surfacique (ci-après « échangeur 20 ») qui est agencé dans le carter de soufflante 11. L'échangeur 20 permet de refroidir le fluide destiné à lubrifier et/ou refroidir ces organes et/ou équipements. Dans le présent exemple, le fluide est une huile et la source froide destiné à refroidir l'huile est le flux d'air circulant dans la turbomachine 1.

En référence aux figures 2 à 7, l'échangeur 20 comporte une paroi de support 21 qui s'étend suivant une direction longitudinale L parallèle à l'axe longitudinal X-X. La paroi de support 21 est ici sensiblement plane. Cette paroi de support 21 peut ne pas être tout à fait plane mais incurvée pour suivre le profil de la paroi du carter de soufflante 11 qui est destinée à porter l'échangeur de chaleur 20 et qui est sensiblement cylindrique (d'axe longitudinal X-X). L'échangeur 20 peut occuper toute la paroi du carter de soufflante 11 ou être agencé sur une portion de celle-ci.

L'échangeur 20 comprend également un panneau 22 qui s'étend suivant la direction longitudinale L sur une longueur prédéterminée. Le panneau 22 est agencé sensiblement parallèlement à la paroi de support 21. Le panneau 22 est agencé au-dessus ou au-dessous de la paroi de support 21. Dans la suite de la description, les termes « dessus/externe » et « dessous/interne » sont utilisés en référence à un positionnement par rapport au plan dans lequel est agencée la paroi de support 21, ici le plan XY comprenant l'axe longitudinal X-X et un axe transversal Y-Y perpendiculaire à l'axe longitudinal X-X. On entend par « transversal » ou « transversalement » toute direction parallèle à l'axe transversal Y-Y et par « radial » ou « radialement » toute direction perpendiculaire au plan XY.

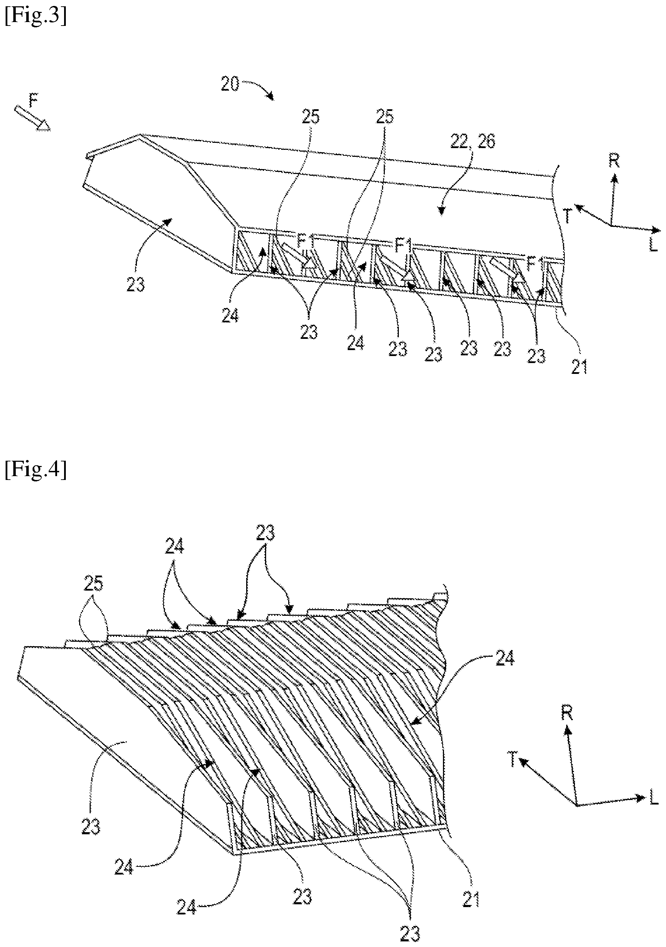

Comme représenté sur les figures 3 et 4, le panneau 22 et la paroi de support 21 sont liés ensemble par des cloisons 23. Chacune de ces cloisons 23 s'élève depuis la paroi de support 21 jusqu'au panneau 22 suivant une direction radiale R et s'étend suivant la direction longitudinale L. Les cloisons 23 sont planes, bien qu'elles puissent présenter une forme incurvée. Les cloisons 23 sont agencées successivement et de manière régulière suivant une direction transversale T. Elles sont agencées parallèlement les unes des autres pour définir entre elles une succession de canaux 24 rectilignes dans lesquels s'écoule un premier flux d'air F1. Ce premier flux d'air F1 correspond à une partie du flux d'air secondaire F entrant dans la veine secondaire V2 et qui traverse l'échangeur 20. Les canaux 24 formés par les cloisons 23 sont orientés dans une première direction d'écoulement du flux d'air F1. Cette direction d'écoulement correspond ici à la direction longitudinale L.

L'échangeur 20 comporte également des ailettes 25 qui sont agencées dans les canaux 24 de sorte à être balayées par le flux d'air F1. Les ailettes 25 sont, de préférence, rectilignes et planes, bien qu'elles puissent être incurvées. Elles peuvent également présenter une arête externe discontinue suivant la direction longitudinale L, comme représenté sur les figures 3 et 4. Chacune des ailettes 25 s'élève suivant la direction radiale R et s'étend suivant la direction d'écoulement du flux d'air F1. Plus particulièrement, les ailettes 25 sont agencées parallèlement les unes des autres et aux cloisons 23 et de manière régulière dans chacun des canaux 24 suivant la direction transversale T.

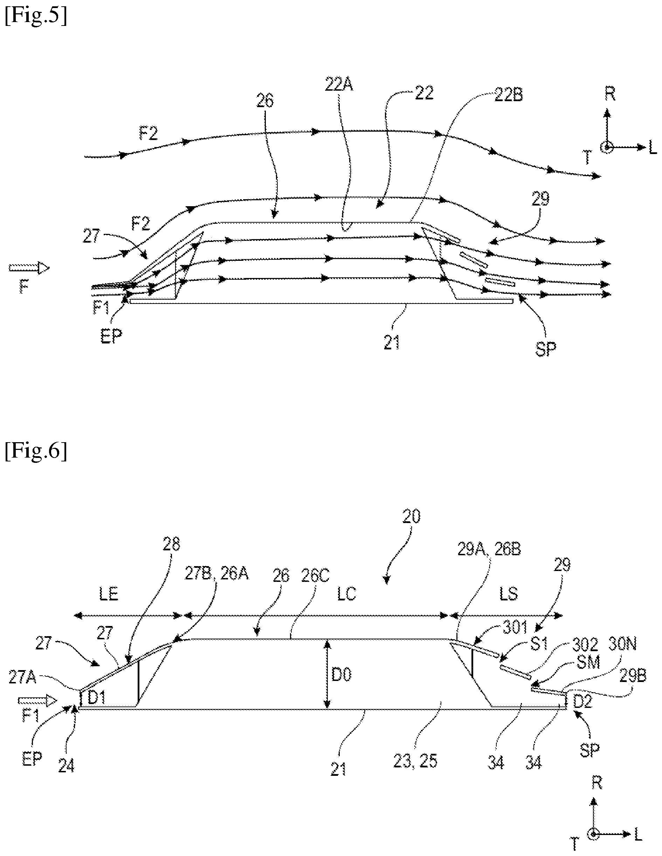

En référence aux figures 5 et 6, le panneau 22 comporte une surface interne 22A et une surface externe 22B. La surface interne 22A est en regard de la paroi de support 21 de sorte qu'elle est également balayée par le flux d'air F1 entrant dans l'échangeur 20. La surface externe 22B est balayée par un second flux d'air F2. Ce second flux d'air F2 correspond à la partie du flux d'air secondaire F entrant dans la veine secondaire V2 et contournant l'échangeur 20. Le flux d'air F2 s'écoule sur la surface externe 22B suivant une direction d'écoulement globalement parallèle à la direction longitudinale L.

Le panneau 22 comporte une partie centrale 26. La partie centrale 26 s'étend dans un plan sensiblement parallèle au plan XY au-dessus de la paroi de support 21 sur une longueur LC centrale qui peut être inférieure ou égale à la longueur des ailettes 25. En particulier, elle est située à une première distance D0 prédéterminée de la paroi de support 21 suivant la direction radiale R, comme représenté sur la figure 6. Par ailleurs, la partie centrale 26 s'étend suivant la direction transversale T sur une largeur au moins égale à la largeur sur laquelle sont disposées les cloisons 23. En variante, la partie centrale 26 peut présenter une orientation inclinée par rapport à la paroi de support 21 de sorte que le panneau 22 présente au moins en partie un profil aérodynamique courbée. La distance D0 entre la partie centrale 26 et la paroi de support 21 peut alors varier suivant la direction longitudinale L (voir figures 3 et 4).

Comme représenté sur les figures 5 et 6 notamment, le panneau 22 comprend également une partie amont 27 qui est située du côté d'une entrée principale EP des canaux 24 de l'échangeur 20 (suivant le sens de circulation du flux d'air secondaire F). Elle comporte une paroi 28 présentant un profil divergent pour guider et ralentir le flux d'air F1 entrant dans les canaux 24. Plus particulièrement, le profil de la paroi 28 est sensiblement ondulé ou incurvé dans un plan défini par les directions longitudinale L et radiale R. La partie amont 27 peut recouvrir une partie aval des ailettes 25 (non représenté) et s'étend sur une longueur LE d'entrée qui est inférieure à la longueur LC de la partie centrale 26.

La partie amont 27 comporte également une extrémité amont 27A libre qui délimite l'entrée principale EP des canaux 24 avec la paroi de support 21. Cette entrée principale EP est définie par une distance D1 d'entrée prédéterminée suivant la direction radiale R. La valeur de la distance D1 d'entrée est, de préférence, inférieure à la distance D0 de sorte que le flux d'air F1 est ralenti en entrant dans les canaux 24. La partie amont 27 comporte, de plus, une extrémité aval 27B qui est opposée à l'extrémité amont libre 27A, comme représenté sur la figure 6. Cette extrémité aval 27B relie la partie amont 27 à un bord amont 26A de la partie centrale 26. La surface externe 27C de la partie amont 27 présente une continuité de surface avec la surface externe 26C de la partie centrale 26.

En référence à la figure 6, le panneau 22 comprend, de plus, une partie aval 29 qui est située du côté d'une sortie principale SP des canaux 24 de l'échangeur 20 (suivant le sens de circulation du flux d'air F1) et qui s'étend sur une longueur LS de sortie suivant la direction longitudinale L. Cette longueur LS est inférieure à la longueur LC de la partie centrale 26. Cette partie aval 29 est configurée pour guider et accélérer le flux d'air F1 sortant des canaux 24 de l'échangeur 20. Elle est agencée dans un plan s'étendant suivant la direction transversale T sur une largeur comparable à la largeur sur laquelle s'étendent la partie amont 27 et la partie centrale 26 et peut recouvrir une partie aval des ailettes 25 (non représenté). La partie aval 29 présente une orientation angulaire généralement inclinée par rapport au plan XY dans lequel la paroi de support 21 est agencée de sorte à former un profil globalement décroissant depuis la partie centrale 26 vers la paroi de support 21 (dans le sens de circulation du flux d'air F1). La partie aval 29 est pourvue d'une extrémité amont 29A qui la relie à un bord aval 26B de la partie centrale 26 et une extrémité aval 29B qui est une extrémité libre opposée à l'extrémité amont 29A. L'extrémité aval 29B est séparée de la paroi de support 21 par une seconde distance D2 prédéterminée dite de sortie. Cette distance D2 de sortie définit la sortie principale SP des canaux 24 par laquelle s'écoule le flux d'air F1. La valeur de la distance D2 est inférieure à la valeur de la distance D0, ces deux distances étant mesurées suivant la direction radiale R. La valeur de la distance D2 représente entre 5% et 60% de la valeur de la distance D0. Les parties centrale 26, amont 27 et aval 29 du panneau 22 sont réalisées en une seule pièce et par exemple, par un procédé de fabrication additive (ou impression 3D) tel qu'un procédé de fusion sélective sur lit de poudre.

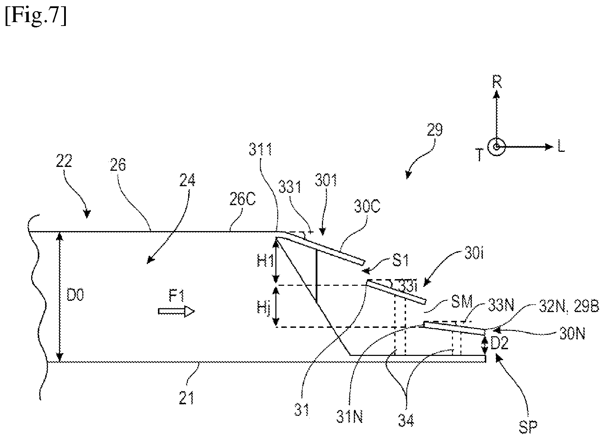

La partie aval 29 comporte également des volets 30i fixes, avec i=1, ..., N où N est un nombre entier représentant le nombre maximal de volets 30i fixes. Comme représenté sur les figures 6 et 7, ces volets 30i sont disposés d'amont en aval les uns derrière les autres depuis le panneau 22 vers la paroi de support 21 de sorte que la partie aval 29 présente un profil globalement convergent. L'agencement de deux volets 30i adjacents délimite une sortie additionnelle Sj des canaux 24, j=1, ..., M où M étant un nombre entier représentant le nombre maximal de sorties additionnelles.

La partie aval 29 comporte un nombre N de volets 30i qui est compris entre deux et cinq, et de préférence entre trois et cinq de sorte que le nombre M de sorties additionnelles Sj est compris entre 1 et quatre et de préférence entre deux et quatre. Chacun des volets 30i est pourvu d'un bord amont 31 i et d'un bord aval 32i opposé au bord amont 31i. En fonction du nombre N de volets 30i, la partie aval 29 comporte au moins un volet 301 externe et un volet 30N interne, comme représenté sur la figure 7. Plus particulièrement, le volet 301 externe est disposé en amont de tout autre volet 30i de sorte que son bord amont 311 représente l'extrémité amont 29A de la partie aval 29 qui le relie à la partie centrale 26. Le volet 301 externe comprend une surface externe 30C qui a une continuité de surface avec la surface externe 26C de la partie centrale 26. Le volet 30N interne est agencé en aval de tout autre volet 30i de sorte que son bord aval 32N représente l'extrémité aval libre 29B de la partie aval 29 qui délimite la sortie principale SP des canaux 24 avec la paroi de support 21.

Par ailleurs, les volets 30i sont agencés suivant une direction opposée à la direction radiale R pour que le bord aval 32i d'un volet 30i soit situé au voisinage du bord amont 31i d'un volet 30i adjacent. Plus particulièrement, les bords amont 31i et aval 32i de volets 30i adjacents sont agencés sensiblement dans un même plan perpendiculaire à ladite paroi de support 21 suivant la direction radiale R, comme représenté sur la figure 7.

Dans un mode de réalisation préféré, chacun des volets 30i est agencé dans un plan qui s'étend dans la direction transversal T sur un largeur au moins égale à la largeur sur laquelle sont disposées les canaux 24.

Comme représenté sur la figure 7, chacun des volets 30i est incliné d'un angle 33i prédéterminé par rapport à la paroi de support 21. La valeur de chacun des angles 33i prédéterminé peut varier entre 0° et 45°. La valeur des angles 33i de deux volets adjacents définit une ouverture de la sortie additionnelle Sj. Plus particulièrement, lorsque la valeur de l'angle 33i du volet 30i amont (dans le sens de circulation ou d'écoulement du flux d'air F1) est proche de 0°, ce volet 30i est agencé dans un plan sensiblement parallèle à celui de la paroi de support 21. L'ouverture de la sortie additionnelle Sj permet un écoulement moins important du flux d'air F1. À l'inverse, lorsque la valeur de l'angle 33i du volet 30i amont est proche de 45°, l'ouverture de la sortie additionnelle Sj est augmentée de même que l'écoulement du flux d'air F1. De préférence, la valeur de chacun des angles 33i prédéterminé est comprise entre 5° et 30°.

Par ailleurs, les angles 33i des volets 30i peuvent présenter des valeurs différentes de sorte que les sorties additionnelles Sj peuvent avoir des ouvertures différentes le long de la partie aval 29.

Dans un mode de réalisation préféré, la valeur des angles 33i prédéterminés des volets 30i diminue suivant la direction longitudinale L depuis la partie centrale 26 du panneau 22 jusqu'à la sortie principale SP des canaux 24. Le volet 301 externe présente alors un angle 331 suffisamment faible pour éviter un décollement du flux d'air F2 en aval de la partie centrale 26 du panneau 22. Par ailleurs, la présence de plusieurs volets 30i adjacents permet de ne pas allonger la partie aval 29 ce qui conduirait à réduire la longueur LC de la partie centrale 26 pénalisant l'échange thermique entre le flux d'air F1 et l'huile.

Dans une variante, les angles 33i des volets 30i ont tous des valeurs identiques. Les volets 30i sont alors tous disposés dans des plans parallèles entre eux.

Comme représenté sur la figure 7, la distance entre les bords amont 31i de deux volets adjacents définit une hauteur Hj de sortie additionnelle Sj. Les valeurs des hauteurs Hj peuvent présenter des valeurs différentes ou identiques les unes aux autres. En revanche, toutes les valeurs des hauteurs Hj sont inférieures ou égales à la valeur de la distance D2 définissant la sortie principale des canaux 24.

Par ailleurs, chaque hauteur Hj de sortie additionnelle représente entre 5% et 60% de la distance D0.

L'échangeur 20 comprend, de plus, des éléments de supports 34 permettant de relier les volets 30i à la paroi de support 21. Chaque élément de support 34 s'élève depuis la paroi de support 21 suivant la direction radiale, à l'aplomb d'un volet 30i. Le nombre d'élément de support 34 peut donc être égal au nombre N de volets 30i de la partie aval 29. Les volets 30i ayant une inclinaison par rapport à la paroi de support 21, les éléments de support 34 présentent une forme sensiblement trapézoïdale. Dans un mode de réalisation particulier, certains volets 30i dont le volet externe 301 sont reliés à la paroi de support 21 par la partie aval des ailettes 25. Dans cet exemple de réalisation, le nombre d'éléments de support 34 est inférieur au nombre N de volets 30i. Les éléments de support 34 peuvent être plus épais que les ailettes 25. Les ailettes 25, les cloisons 23 tout comme les éléments de support 34 peuvent être fixés chacun à la paroi de support 21 par brasure indépendamment les uns des autres ou ensemble. Alternativement, les ailettes 25, les cloisons 23 et les éléments de support 34 peuvent former une seule pièce monobloc avec la paroi de support 21. Bien entendu, l'échangeur 20 peut, dans son ensemble, être fabriqué par une autre méthode de fabrication telle que l'usinage, le forgeage ou encore le brasage.

L'échangeur 20 de chaleur selon l'invention présente notamment l'avantage d'homogénéiser la vitesse d'écoulement ou de circulation du flux d'air F1 sur toute la distance D0.

Par ailleurs, la présence de plusieurs volets fixes présentant des orientations angulaires différentes permet de supprimer la zone de recirculation du flux d'air F2 qui contourne l'échangeur thermique sans pour autant augmenter la longueur LS de sortie. Ainsi, la trainée induite par l'échangeur se trouve réduite.

## Revendications

1. Échangeur (20) de chaleur surfacique pour une turbomachine (1) d'aéronef, cet échangeur (20) de chaleur comprenant :
- une paroi de support (21),
- un panneau (22) agencé sensiblement parallèlement à la paroi de support (21),
- des cloisons (23) configurées pour lier la paroi de support (21) au panneau (22) suivant une direction perpendiculaire à ladite paroi de support (21), lesdites cloisons (23) définissant entre elles des canaux (24) dans lesquels s'écoule un premier flux d'air (F1), lesdites cloisons (23) étant sensiblement parallèles entre elles et à une première direction d'écoulement dudit premier flux d'air (F1),
- des ailettes (25) situées dans lesdits canaux (24) et s'étendant sensiblement parallèlement entre elles et à ladite première direction d'écoulement, lesdites ailettes (25) étant destinées à être balayées par ledit premier flux d'air (F1), ledit panneau comportant :
- une partie centrale (26) sensiblement parallèle à ladite paroi de support (21) et située à une première distance (D0) de ladite paroi de support (21),
- une partie aval (29) présentant une orientation générale inclinée par rapport à ladite paroi de support (21), ladite partie aval (29) comportant une extrémité amont (29A) reliée à ladite partie centrale (26) et une extrémité aval (29B) libre située à une seconde distance (D2) de la paroi de support (21) et délimitant une sortie principale des canaux (24) avec la paroi de support (21), ladite seconde distance (D2) étant inférieure à ladite première distance (D0),
**caractérisé en ce que** ladite partie aval (29) comporte au moins deux volets (30i) fixes disposés d'amont en aval les uns derrière les autres et configurés pour délimiter entre eux au moins une sortie additionnelle (Sj) desdits canaux (24).

2. Échangeur (20) de chaleur selon la revendication précédente,
**caractérisé en ce que** le nombre (N) de volets (30i) est compris entre deux et cinq.

3. Échangeur (20) de chaleur selon l'une quelconque des revendications précédentes,
**caractérisé en ce que** chacun desdits volets (30i) s'étend dans un plan incliné d'un angle (33i) prédéterminé par rapport à ladite paroi de support (21).

4. Échangeur (20) de chaleur selon la revendication précédente,
**caractérisé en ce que** la valeur des angles (33i) prédéterminés desdits volets (30i) diminue depuis ladite partie centrale (26) jusqu'à ladite sortie principale (SP).

5. Échangeur (20) de chaleur selon la revendication 3 ou 4,
**caractérisé en ce que** la valeur de chacun desdits angles (33i) des volets (30i) est comprise entre 0° et 45°.

6. Échangeur (20) de chaleur selon l'une des revendications précédentes,
**caractérisé en ce que** la ou chaque sortie additionnelle (Sj) est définie par une hauteur (Hj) dont la valeur est inférieure ou égale à ladite seconde distance (D2).

7. Échangeur (20) de chaleur selon la revendication précédente,
**caractérisé en ce que** la ou chaque hauteur (Hj) et la seconde distance (D2) représentent chacune entre 5% et 60% de ladite première distance (D0).

8. Échangeur (20) de chaleur selon l'une des revendications précédentes,
**caractérisé en ce que** chacun desdits volets (30i) est relié à ladite paroi de support (21) par au moins une partie desdites ailettes (25) et/ou par un élément de support s'élevant entre la paroi de support (21) et les volets (30i).

9. Échangeur (20) de chaleur selon l'une des revendications précédentes,
**caractérisé en ce qu'**au moins une partie desdits volets (30i) comportent un bord aval (32i) situé au voisinage d'un bord amont (31i) d'un volet (30i) adjacent, lesdits bords amont (31i) et aval (32i) étant agencés sensiblement dans un même plan perpendiculaire à ladite paroi de support (21).

10. Turbomachine (1) d'aéronef comportant au moins un échangeur (20) de chaleur selon l'une quelconque des revendications précédentes.

## Patentansprüche

1. Oberflächenwärmetauscher (20) für ein Turbotriebwerk(1) eines Flugzeugs, wobei dieser Wärmetauscher (20) umfasst:
- eine Stützwand (21),
- eine Platte (22), die im Wesentlichen parallel zur Stützwand (21) angeordnet ist,
- Trennwände (23), die konfiguriert sind, um die Stützwand (21) entlang einer Richtung senkrecht zur Stützwand (21) mit der Platte (22) zu verbinden, wobei die Trennwände (23) zwischen sich Kanäle (24) definieren, in denen ein erster Luftstrom (F1) strömt, wobei die Trennwände (23) im Wesentlichen parallel zueinander und zu einer ersten Strömungsrichtung des ersten Luftstroms (F1) sind,
- Rippen (25), die sich in den Kanälen (24) befinden und sich im Wesentlichen parallel zueinander und zur ersten Strömungsrichtung erstrecken, wobei die Rippen (25) dazu bestimmt sind, von dem ersten Luftstrom (F1) geflutet zu werden, wobei die Platte umfasst:
- einen zentralen Teil (26) im Wesentlichen parallel zur Stützwand (21) und in einem ersten Abstand (D0) zur Stützwand (21),
- einen stromabwärts gelegenen Teil (29), der eine allgemeine geneigte Ausrichtung in Bezug auf die Stützwand (21) aufweist, wobei der stromabwärts gelegene Teil (29) ein stromaufwärts gelegenes Ende (29A) umfasst, das mit dem zentralen Teil (26) verbunden ist und ein stromabwärts gelegenes freies Ende (29B), das sich in einem zweiten Abstand (D2) zur Stützwand (21) befindet und einen Hauptausgang der Kanäle (24) mit der Stützwand (21) begrenzt, wobei der zweite Abstand (D2) geringer als der erste Abstand (D0) ist,
**dadurch gekennzeichnet, dass** der stromabwärts gelegene Teil (29) mindestens zwei feststehende Klappen (30i) umfasst, die von stromaufwärts nach stromabwärts hintereinander angeordnet sind und konfiguriert sind, um zwischen sich mindestens einen zusätzlichen Ausgang (Sj) der Kanäle (24) zu begrenzen.

2. Wärmetauscher (20) nach dem vorstehenden Anspruch,
**dadurch gekennzeichnet, dass** die Anzahl (N) an Klappen (30i) zwischen zwei und fünf umfasst ist.

3. Wärmetauscher (20) nach irgendeinem der vorstehenden Ansprüche,
**dadurch gekennzeichnet, dass** sich jede der Klappen (30i) in einer schrägen ebene um einen vorbestimmten Winkel (33i) in Bezug auf die Stützwand (21) erstreckt.

4. Wärmetauscher (20) nach dem vorstehenden Anspruch,
**dadurch gekennzeichnet, dass** der Wert der vorbestimmten Winkel (33i) der Klappen (30i) vom zentralen Teil (26) bis zum Hauptausgang (SP) hin abnimmt.

5. Wärmetauscher (20) nach Anspruch 3 oder 4,
**dadurch gekennzeichnet, dass** der Wert eines jeden der Winkel (33i) der Klappen (30) zwischen 0° und 45° liegt.

6. Wärmetauscher (20) nach einem der vorstehenden Ansprüche,
**dadurch gekennzeichnet, dass** der oder jeder zusätzliche Ausgang (Sj) durch eine Höhe (Hj) definiert ist, deren Wert kleiner oder gleich dem zweiten Abstand (D2) ist.

7. Wärmetauscher (20) nach dem vorstehenden Anspruch,
**dadurch gekennzeichnet, dass** die oder jede Höhe (Hj) und der zweite Abstand (D2) jeweils zwischen 5% und 60% des ersten Abstands (D0) darstellen.

8. Wärmetauscher (20) nach einem der vorstehenden Ansprüche,
**dadurch gekennzeichnet, dass** jede der Klappen (30i) durch mindestens einen Teil der Rippen (25) und/oder durch ein Stützelement, das sich zwischen der Stützwand (21) und den Klappen (30i) erhebt, mit der Stützwand (21) verbunden ist.

9. Wärmetauscher (20) nach einem der vorstehenden Ansprüche,
**dadurch gekennzeichnet, dass** mindestens ein Teil der Klappen (30i) einen stromabwärts gelegenen Rand (32i) umfassen, der sich in der Nähe eines stromaufwärts gelegenen Randes (31i) einer benachbarten Klappe (30i) befindet, wobei die stromaufwärts gelegenen (31i) und stromabwärts gelegenen (32i) Ränder im Wesentlichen in einer gleichen Ebene senkrecht zur Stützwand (21) angeordnet sind.

10. Turbotriebwerk (1) eines Flugzeugs, das mindestens einen Wärmetauscher (20) nach einem der vorstehenden Ansprüche umfasst.

## Claims

1. A surface heat exchanger (20) for an aircraft turbomachine (1), this heat exchanger (20) comprising:
- a support wall (21),
- a panel (22) arranged substantially parallel to the support wall (21),
- partitions (23) configured to connect the support wall (21) to the panel (22) in a direction perpendicular to said support wall (21), said partitions (23) defining between them channels (24) in which a first air flow (F1) flows, said partitions (23) being substantially parallel to each other and to a first flow direction of said first air flow (F1),
- fins (25) located in said channels (24) and extending substantially parallel to each other and to said first flow direction, said fins (25) being intended to be swept by said first air flow (F1),
said panel comprising:
- a central portion (26) substantially parallel to said support wall (21) and located at a first distance (D0) from said support wall (21),
- a downstream portion (29) having a general orientation inclined with respect to said support wall (21), said downstream portion (29) comprising an upstream end (29A) connected to said central portion (26) and a free downstream end (29B) located at a second distance (D2) from the support wall (21) and delimiting a main outlet of the channels (24) with the support wall (21), said second distance (D2) being less than said first distance (D0),
**characterised in that** said downstream portion (29) comprises at least two stationary flaps (30i) arranged one behind the other from upstream to downstream and configured to delimit between them at least one additional outlet (Sj) from said channels (24).

2. The heat exchanger (20) according to the preceding claim, **characterised in that** the number (N) of flaps (30i) is between two and five.

3. The heat exchanger (20) according to any one of the preceding claims,
**characterised in that** each of said flaps (30i) extends in a plane inclined at a predetermined angle (33i) with respect to said support wall (21).

4. The heat exchanger (20) as claimed above,
**characterised in that** the value of the predetermined angles (33i) of said flaps (30i) decreases from said central portion (26) to said main outlet (SP).

5. The heat exchanger (20) according to claim 3 or 4,
**characterised in that** the value of each of said angles (33i) of the flaps (30i) is between 0° and 45°.

6. The heat exchanger (20) according to one of the preceding claims,
**characterised in that** the or each additional outlet (Sj) is defined by a height (Hj) whose value is less than or equal to said second distance (D2).

7. The heat exchanger (20) as claimed above,
**characterised in that** the or each height (Hj) and the second distance (D2) each represent between 5% and 60% of said first distance (D0).

8. The heat exchanger (20) according to one of the preceding claims, **characterised in that** each of said flaps (30i) is connected to said support wall (21) by at least a portion of said fins (25) and/or by a support element rising between the support wall (21) and the flaps (30i).

9. The heat exchanger (20) according to one of the preceding claims, **characterised in that** at least a portion of said flaps (30i) comprise a downstream edge (32i) located in the vicinity of an upstream edge (31i) of an adjacent flap (30i), said upstream (31i) and downstream (32i) edges being arranged substantially in the same plane perpendicular to said support wall (21).

10. An aircraft turbomachine (1) comprising at least one heat exchanger (20) according to any one of the preceding claims.
